# EUROPEAN PATENT SPECIFICATION

(11) **EP 0 853 433 B1**
(45) Date of publication and mention of the grant of the patent: **10.11.2004**
(21) Application number: 98104859.8
(22) Date of filing: 22.08.1995
(51) Int. Cl.: H04N 7/08, H04N 7/084, H04N 5/913

(54) **Method and apparatus for detecting a source identification signal in a video signal**
Verfahren und Einrichtung zur Einfügung von Quellenidentifikationsdaten in ein Videosignal
Méthode et dispositif pour insérer des données d'identification de source dans un signal vidéo

(30) Priority: 24.08.1994 US 294983
(43) Date of publication of application: 15.07.1998
(62) Divisional of application: 95930246.4
(73) Proprietor: Macrovision Corporation, Santa Clara, CA 95050 (US)
(72) Inventor: Copeland, Gregory C., San Jose, CA 94089 (US)
(74) Representative: Needle, Jacqueline

(56) References cited:
- EP-A- 0 041 121
- EP-A- 0 107 567
- CH-A- 627 034
- GB-A- 2 165 129
- US-A- 3 848 082
- US-A- 4 807 031
- US-A- 5 402 488

## Description

The present invention relates to a method and apparatus for detecting a source identification signal in a video signal.

With video piracy becoming more rampant by the day, it is becoming more desirable to have a method for identifying whether a video recording or video transmission originates from an authorized source. Source or tape identification processes using the data transmission capability of the vertical interval are known. However such systems suffer from the ease with which source identification data may be eliminated by blanking and reinsertion techniques. The source identification or "fingerprint" systems known do not transmit the data during the active time of the video signal.

One form of video piracy has been to use a video camera to record the picture and sound off the screen and speakers in a theatre displaying a movie. Admittedly this method produces a very inferior copy. However, in certain parts of the world, such a copy is acceptable. The use of video movie projection systems in theatres is becoming more popular. Generally, these systems incorporate a form of video scrambling to protect the electronic video signals prior to projection. However, vertical interval source identification and video scrambling do not protect the projected image once the signal has been descrambled.

A method of source identification of movie and other material is needed to provide a source code to reduce the likelihood of illegal copying and if such copying is done, identify the theatre or source of the duplication.

GB 2,165,129 discloses a system and method of transmitting digital data over a television video channel so as to provide a pulsating image on the screen of the cathode ray tube of a television receiver. This image can be confined to a small area of the display, the remaining area of the screen being used for normal picture transmission. The data-carrying area of the screen is monitored by an appropriate photo-sensitive device providing output pulses to be shaped to provide recovered data.

It is an object of the present invention to detect data injected into the active picture area of a video signal without disturbing the viewing of the video signal.

According to a first aspect of the present invention there is provided a method of detecting source identification data incorporated in an active picture of a video signal, the data including a first synchronising word, wherein the source identification data is imperceptible to a viewer, the method comprising the steps of:
low pass filtering the video signal and source identification data to provide a low passed video signal;
generating a first clock signal;
digitising the low passed video signal in response to the first clock signal;
detecting changes in a video pedestal of the video signal in the form of dynamic offsets of the video pedestal, wherein each offset is kept constant for an entire field;
storing consecutive digital signals in a storage register, where the first synchronising word is included in the source identification data contained in the digitised signal;
generating a second synchronising word;
correlating the first synchronising word with the second synchronising word, so as to recover the source identification data; and
accumulating the source identifcation data to enable the video signal and noise to average out; and
outputting the source identification data corresponding to the dynamic offsets in the video pedestal.

The invention also extends to apparatus for detecting source identification data incorporated in an active picture of a video signal, the data including a first synchronising word, wherein the source identification data is imperceptible to a viewer, the apparatus comprising:
a low pass filter for receiving a video signal containing source identification data;
a clock signal generator;
an analog to digital converter for receiving the low passed video signal output from the low pass filter and digitising the signal in response to a first clock signal generated by the clock signal generator;
a matched filter arranged to receive the digitised signals and to detect changes in a video pedestal of the video signal in the form of dynamic offsets of the video pedestal, wherein each offset is constant for an entire field;
a storage register for storing consecutive digital signals, where the first synchronising word is included in the source identification data contained in the digitised signal;
a sync word generator for generating a second synchronising word;
means for correlating the first synchronising word with the second synchronising word so as to recover the source identification data and
a register for accumulating the source identification data whereby the final decoded source identification data corresponding to the dynamic offsets in the video pedestal is output.

The reader detects the finger print data from the video signal and processes the data for display. From this data the source of the video information such as a specific theatre and/or the date the video material was played can be determined.

Embodiments of the present invention will hereinafter be described, by way of example, with reference to the accompanying drawings, in which:
Figure 1 shows a block diagram of data insertion apparatus of an embodiment of the invention,
Figures 2a to 2e are a series of wave forms representing a sync word, and
Figure 3 shows a block diagram of a fingerprint reader.

A data injection or "fingerprinting" process of an embodiment of the invention may comprise dynamically offsetting the video pedestal to carry information which can then be read back from any videotape made from the output of the data-injecting unit or from a video tape of a screen display of a signal containing the data. Generally, the fingerprint carries the ID number of the unit used and the current date. The offset lasts for at least one entire field and has an amplitude of approximately 0.5 IRE units. A given field either has the nominal setup or a setup value differing from nominal by 0.5 IRE units.

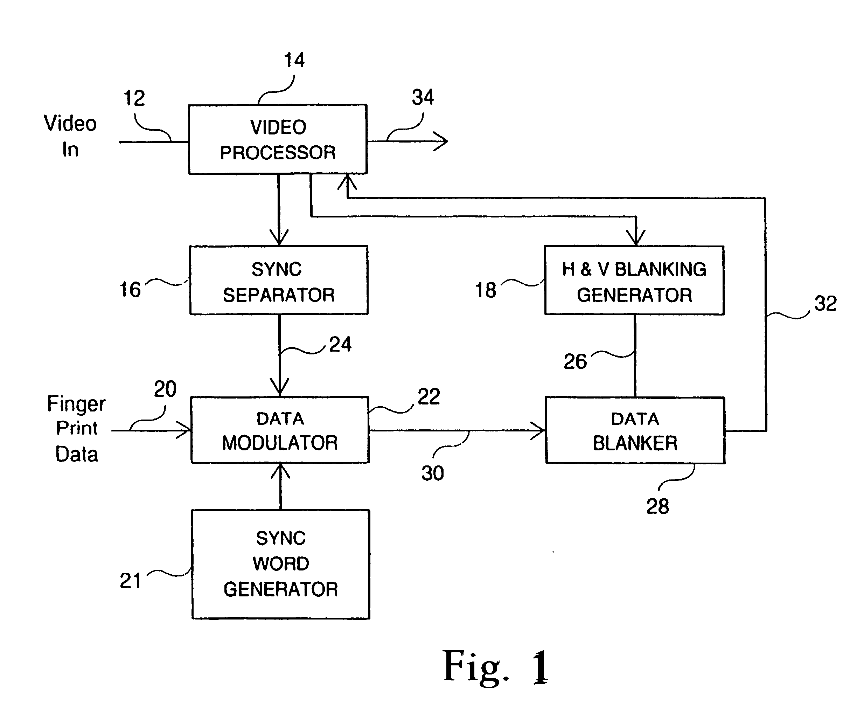

As shown in Figure 1, a video signal 12 to be fingerprinted is input to a video processor 14. The video processor 14 applies the video signal 12 to a sync separator 16 and to an H & V blanker 18. Finger print data 20 is input to a data modulator 22. The finger print data 20 may be in serial or parallel form.

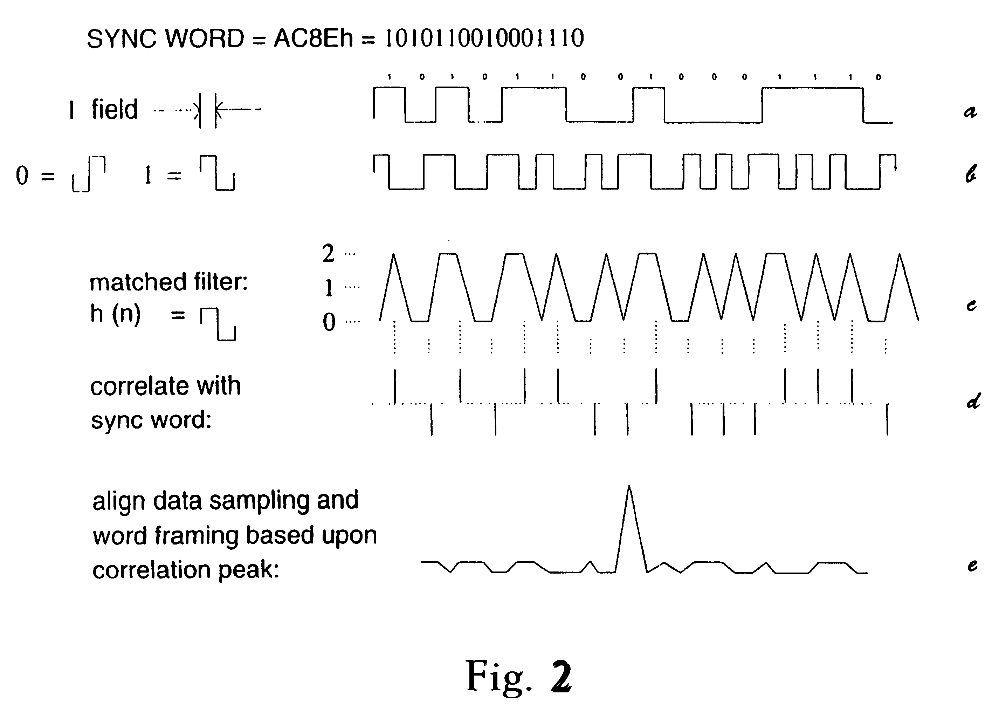

The fingerprint data format is a 64-bit block. The first 16 bits are a (data) frame synchronisation word generated by a sync word generator 21; the next 16 bits are the source ID number; and the final 32 bits are the date code. A typical sync word is shown in Figure 2a. The block is repeated indefinitely. The signal format is binary Manchester: a "0" is represented by a 0-1 transition, a "1" by a 1-0 transition, with the phase reference supplied by the sync word as shown in Figure 2b. Each data bit therefore occupies two fields. It will be apparent to one skilled in the art that other data formats can be used, with the recovery process adjusted accordingly.

Data modulator 22 receives the finger print data 20 in either serial or parallel form and the sync word data 22 and generates formatted finger print data as described above consisting of 16 bits as synchronisation word followed by 16 bits for a source ID and 32 bits for a date code. Since the data is to be input to a video signal, it is necessary to synchronise the data to the video signal. An output of sync separator 16 consists of a vertical (field) synchronising pulse 24. Sync separator 16 uses techniques known to those skilled in television engineering to separate vertical synchronising pulses 24 from the video signal. In addition to putting the data in a format usable by the system, data modulator 22 synchronises the beginning of any formatted finger print data to the field rate using vertical synchronising pulses 24.

Since the individual bits of this data cover one or more fields, it is necessary to blank out the data during the horizontal and vertical blanking periods of the inputted video signal. H & V blanking generator 18 receives the video signal from the video processor 14 and generates a combined H & V blanking signal 26 which is coupled to a data blanker 28. Formatted finger print data 30 is coupled to a data input of the data blanker 28. Data blanker 28 uses the H & V blanking signal 26 to blank out the data during the horizontal and vertical blanking intervals of the input video signal. The output of data blanker 28 is blanked formatted finger print data 32 which is coupled back into the video processor and added to the video signal thus producing fingerprinted video signal 34.

When fingerprinted video signal 34 is projected onto a screen or displayed on a video monitor, the variation in video level due to the insertion is imperceptible to a viewer, but is detected by any video recorder recording the signal directly or via a television camera doing an off-screen recording of the projected image.

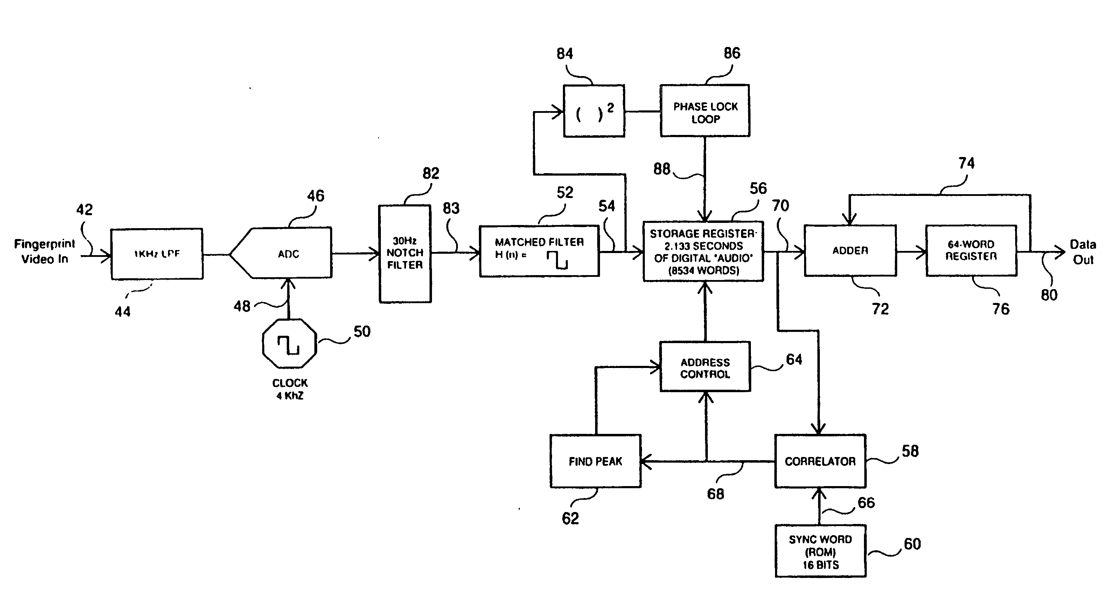

The recovery or "reading" process operates as shown in Figure 3. A finger print reader 40 is used to detect and analyse any formatted finger print data 30 present in a fingerprinted video signal 42 which is coupled to low pass filter 44 which has a cut-off frequency of about 1 Khz. The output of the low pass filter 44 is coupled to a 30 Hz notch filter 82. 30 Hz notch filter 82 is used to remove a 30 Hz component that can be observed in the data as a frame to frame variation in tape output level due to differences in playback video heads. The 30 Hz notch filter can be placed either before or after the matched filter 52.

The output of 30 Hz notch filter 82 may be coupled to the analog to digital converter 46. The analog to digital converter 46 also receives a clock signal 48 from a clock generator 50. The clock frequency is approximately 4 Khz. However clock frequencies from 1 Khz to 15 Khz are equally usable. The clock frequency may also be locked to the incoming video. The output of the analog to digital converter 46 as is shown in Figure 2b is coupled to the matched filter 52. The matched filter 52, to a first approximation, doubles the data amplitude and largely cancels the video content. The output of the matched filter 52 is represented by Figure 2c.

The output of the matched filter 52 may not always provide a sufficiently clean signal for further processing due to time base errors in the playback signal. To improve the usability of the output signal, the matched filter 52 is coupled to a squarer 53 and to a phase locked loop 55 to generate a clock signal at the bit of the data. This clock signal is coupled to a storage register 56 to eliminate variations in the data due to time base errors.

The output of the matched filter 52 that contains data with cancelled video is then correlated to the sync word to establish the data framing. Once the data is properly framed, it is digitally integrated to further improve the signal to noise ratio (SNR). This process consists of writing the digitised values of 128 consecutive fields into a storage register 56 that contains 128 individual registers that have been clocked by clock signal 57. Shift register 56, correlator 58, sync word generator 60, peak detector 62 and address control 64 are in a loop which is used to synchronise the data to make it readable by the user. The output of storage register 56 is coupled to correlator 58. In addition a pre-programmed sync word generator 60 couples a unique sync word 66, as shown in Figure 2d, to correlator 58 to correlate the sync word information in the fingerprint data 32 with sync word 66. Correlation data 68, as shown in Figure 2e is coupled to peak detector 62. If there is a match, the digitised values of the next 128 fields are added to those of the first, and the process is continued as required. As the accumulation proceeds, the data value in each register will be directly multiplied by the number of passes while the video and noise will tend to average out. After a suitable number of passes, generally in excess of twenty, the recovered sequence of 128 high or low offset fields is coupled to adder 72 and 64 word register 76 where the data is decoded to the original 64 bits, and the pertinent data is read out to an output terminal 80.

The apparatus described above may use a hardware implementation or a combination of hardware and software.

The data that is read out can be connected to any display device capable of reading a 64 bit data stream. Such a device could be an alphanumeric display, a computer screen or incorporated back into the video signal for an on screen display. The display device displays the ID number and data code.

During an experiment using the elements described above, data has been found to be recoverable down to the vicinity of 1/2 millivolt on a 1 volt video signal, less than 0.1 IRE.

It is important to note, that unless the sync word in the insertion device and the reader are identical, no output will result or misleading results will be obtained. In order to make the reading device have a more universal use, the sync word generator in the reader has an ability to be pre-programmed either by the manufacturer for the user or by the user.

In principle, while using the system described above, a person attempting to defeat the system could simply blank or otherwise distort one or two fields out of every 128 fields, a distortion which might be brief enough not to significantly affect the utility of the pirated signal. Since the data is periodic, this would distort one of the characters. Which character in particular would not be known, but with the present data format, there is at 25% probability of hitting one of the ID number characters, thereby disguising the identity of the pirated unit. Alternatively a pirate may add a signal that will swamp or override the original fingerprint so that the fingerprint reader produces inconsistent or incorrect results.

An alternative implementation has some advantages. In a technique similar to that used for spread-spectrum transmission, the basic data rate may be slowed, and Exclusive-Ors with a known pseudo-random sequence at the original frame rate. Normally the pseudo random sequence will be much longer than the data sequence. This has the advantage of keeping the setup variation rate high, to minimise visibility of the data, while insuring that any attempt to mask a data character would blank an unacceptably long portion of the signal. A second alternative would simply randomly interchange the position of data bits within the block in a time-variant manner, such that no periodic distortion would suffice to distort any particular data character. Data recovery for this second method is clearly more complex.

A third alternative may be to encrypt the data prior to its addition to the signal and to use complementary decryption techniques for detection.

The apparatus and method described above describes a system and method of adding a finger print signal to a video signal. One of the principle uses of this method and apparatus is to prevent piracy or identify the source of the pirated video material. Another embodiment of the concept is to fingerprint an original film that is ultimately recorded into a video format. This can be accomplished by one of two methods. The film as it is being duplicated in film has a bias light source with a short turn on/off time to provide a small increase of illumination in the film printer. This bias would be sufficiently low to create a very small shift in the brightness, but not be visible to a viewer of the film. A second method is to provide such a bias during the projection of the film. The rate of the bias light takes into account the various projection media, direct film projection at 24 frames per second, 25 frames per second when used in a 50 Hz television system or the 3/2 mechanism when used in a 60 Hz television system.

It will be apparent that variations in and modifications to the embodiments as described and illustrated may be made within the scope of the accompanying claims.

## Claims

1. A method of detecting source identification data (30) incorporated in an active picture of a video signal (42), the data including a first synchronising word (22), wherein the source identification data is imperceptible to a viewer, the method comprising the steps of:
low pass filtering the video signal and source identification data to provide a low passed video signal;
generating a first clock signal (48);
digitising the low passed video signal in response to the first clock signal;
detecting changes in a video pedestal of the video signal in the form of dynamic offsets of the video pedestal, wherein each offset is kept constant for an entire field;
storing consecutive digital signals in a storage register (56), where the first synchronising word (22) is included in the source identification data (30) contained in the digitised signal;
generating a second synchronising word (66);
correlating the first synchronising word (22) with the second synchronising word (66), so as to recover the source identification data (30); and
accumulating the source identification data to enable the video signal and noise to average out; and
outputting the source identification data corresponding to the dynamic offsets in the video pedestal.

2. A method as claimed in Claim 1, wherein the method further comprises:
match filtering the low passed video signal to increase the amplitude of the source identification data while cancelling out the video signal.

3. A method as claimed in Claim 1 or Claim 2, wherein the offset of the video pedestal has an amplitude of approximately 0.1 to 0.5 IRE units.

4. A method as claimed in any preceding claim, wherein accumulation of the source identification data takes place in response to a successful correlation of the first and second synchronising words.

5. Apparatus for detecting source identification data (30) incorporated in an active picture of a video signal (42), the data including a first synchronising word (22), wherein the source identification data (30) is imperceptible to a viewer, the apparatus comprising:
a low pass filter (44) for receiving a video signal containing source identification data (30);
a clock signal generator (50);
an analog to digital converter (46) for receiving the low passed video signal output from the low pass filter and digitising the signal in response to a first clock signal (48) generated by the clock signal generator(50);
a matched filter (52) arranged to receive the digitised signals and to detect changes in a video pedestal of the video signal in the form of dynamic offsets of the video pedestal, wherein each offset is constant for an entire field;
a storage register (56) for storing consecutive digital signals, where the first synchronising word (22) is included in the source identification data (30) contained in the digitised signal;
a sync word generator (60) for generating a second synchronising word (66);
means for correlating the first synchronising word (22) with the second synchronising word (66) so as to recover the source identification data (30); and
a register (76) for accumulating the source identification data whereby the final decoded source identification data (80) corresponding to the dynamic offsets in the video pedestal is output.

6. Apparatus as claimed in Claim 5, wherein the low pass filter has a cut off frequency between 200 Hz and 1 Khz.

7. Apparatus as claimed in Claim 5 or Claim 6, wherein said first clock signal has a clock frequency about four times a low pass cut off frequency of said low pass filter.

8. Apparatus as claimed in any of Claims 5 to 7, wherein said sync word generator comprises a preprogrammed read only memory.

9. Apparatus as claimed in any of Claims 5 to 8, wherein the dynamic offsets of the video pedestal are either positive, negative or unchanged, for respective video fields of the video signal.

10. Apparatus as claimed in any of Claims 5 to 9, further comprising:
a second clock signal generator coupled to the matched filter, wherein in response to a generated second clock signal synchronous with the source identification data, the storage register is arranged to store consecutive signals and output them in response to the means for correlation.

## Patentansprüche

1. Verfahren zum Erfassen von Quellenidentifikationsdaten (30), die in einem aktiven Bild von einem Videosignal (42) enthalten sind, wobei die Daten ein erstes Synchronisierwort (22) beinhalten, die Quellenidentifikationsdaten für einen Betrachter nicht wahrnehmbar sind, und das Verfahren die Schritte umfasst:
Tiefpassfiltern des Videosignals und der Quellenidentifikationsdaten, um ein tiefpassgefiltertes Videosignal zur Verfügung zu stellen;
Erzeugen eines ersten Taktsignals (48);
Digitalisieren des tiefpassgefilterten Videosignals als Reaktion auf das erste Taktsignal;
Erfassen von Veränderungen in einer Videobasis des Videosignals in der Form von dynamischen Offsets in der Videobasis, wobei jeder Offset für ein gesamtes Halbbild konstant gehalten wird;
Speichern von aufeinanderfolgenden digitalen Signalen in einem Speicherregister (56), wobei das erste Synchronisierwort (22) in den Quellenidentifikationsdaten (30) enthalten ist, die in dem digitalisierten Signal enthalten sind;
Erzeugen von einem zweiten Synchronisierwort (66);
Korrelieren von dem ersten Synchronisierwort (22) mit dem zweiten Synchronisierwort (66), um so die Quellenidentifikationsdaten (30) wiederzugewinnen; und
Akkumulieren der Quellenidentifikationsdaten, um eine gemittelte Ausgabe des Videosignals und des Rauschens zu ermöglichen; und
Ausgeben der Quellenidentifikationsdaten entsprechend der dynamischen Offsets in der Videobasis.

2. Verfahren nach Anspruch 1, bei dem das Verfahren außerdem umfasst:
angepasstes Filtern des tiefpassgefilterten Videosignals, um die Amplitude der Quellenidentifikationsdaten zu erhöhen, während das Videosignal herausgelöscht wird.

3. Verfahren nach Anspruch 1 oder Anspruch 2, bei dem der Offset der Videobasis eine Amplitude von etwa 0,1 bis 0,5 IRE-Einheiten hat.

4. Verfahren nach einem der vorhergehenden Ansprüche, bei dem das Akkumulieren der Quellenidentifikationsdaten als Reaktion auf ein erfolgreiches Korrelieren von dem ersten und dem zweiten Synchronisierwort stattfindet.

5. Vorrichtung zum Erfassen von Quellenidentifikationsdaten (30), die in einem aktiven Bild von einem Videosignal (42) enthalten sind, wobei die Daten ein erstes Synchronisierwort (22) enthalten, die Quellenidentifikationsdaten (30) für einen Betrachter nicht wahrnehmbar sind, und die Vorrichtung aufweist:
einen Tiefpassfilter (44) zum Empfangen eines Videosignals, das Quellenidentifikationsdaten (30) enthält;
einen Taktsignalgenerator (50);
einen Analog/Digital-Wandler (46) zum Empfangen des tiefpassgefilterten Videosignals, das von dem Tiefpassfilter ausgegeben wird, und zum Digitalisieren des Signals als Reaktion auf ein erstes Taktsignal (48), das von dem Taktsignalgenerator (50) erzeugt wird;
ein angepasstes Filter (52), das dazu ausgestaltet ist, die digitalisierten Signale zu empfangen und Veränderungen in einer Videobasis des Videosignals in der Form von dynamischen Offsets der Videobasis zu erfassen, wobei jeder Offset für ein gesamtes Halbbild konstant ist;
ein Speicherregister (56) zum Speichern von aufeinanderfolgenden digitalen Signalen, wobei das erste Synchronisierwort (22) in den Quellenidentifikationsdaten (30) enthalten ist, die in dem digitalisierten Signal enthalten sind;
einen Synchronisierwortgenerator (60) zum Erzeugen von einem zweiten Synchronisierwort (66);
eine Einrichtung zum Korrelieren von dem ersten Synchronisierwort (22) mit dem zweiten Synchronisierwort (66), um so die Quellenidentifikationsdaten (30) wiederzugewinnen; und
ein Register (76) zum Akkumulieren der Quellenidentifikationsdaten, wodurch die endgültigen dekodierten Quellenidentifikationsdaten (80), die den dynamischen Offsets in der Videobasis entsprechen, ausgegeben werden.

6. Vorrichtung nach Anspruch 5, bei der der Tiefpassfilter eine Grenzfrequenz zwischen 200 Hz und 1 KHz hat.

7. Vorrichtung nach Anspruch 5 oder Anspruch 6, bei der das erste Taktsignal eine Taktfrequenz von etwa dem Vierfachen der Tiefpass-Grenzfrequenz des Tiefpassfilters hat.

8. Vorrichtung nach einem der Ansprüche 5 bis 7, bei der der Synchronisierwortgenerator einen vorprogrammierten ROM-Speicher aufweist.

9. Vorrichtung nach einem der Ansprüche 5 bis 8, bei der die dynamischen Offsets der Videobasis entweder positiv, negativ oder unverändert sind, und zwar für zugehörige Video-Halbbilder des Videosignals.

10. Vorrichtung nach einem der Ansprüche 5 bis 9, außerdem mit:
einem zweiten Taktsignalgenerator, der mit dem angepassten Filter gekoppelt ist, wobei als Reaktion auf ein erzeugtes zweites Taktsignal synchron mit den Quellenidentifikationsdaten das Speicherregister dazu ausgestaltet ist, um aufeinanderfolgende Signale zu speichern und diese in Reaktion auf die Einrichtung zum Korrelieren auszugeben.

## Revendications

1. Procédé de détection de données d'identification de source (30) incorporées à une image active d'un signal vidéo (42), les données comprenant un premier mot de synchronisation (22), dans lequel les données d'identification de source sont imperceptibles pour un observateur, le procédé comprenant les étapes consistant à :
soumettre à un filtrage passe-bas le signal vidéo et les données d'identification de source pour fournir un signal vidéo ayant été soumis à un filtrage passe-bas ;
générer un premier signal d'horloge (48) ;
numériser le signal vidéo ayant été soumis à un filtrage passe-bas en réponse au premier signal d'horloge ;
détecter des variations d'une marge de noir vidéo du signal vidéo sous la forme de décalages dynamiques de la marge de noir vidéo, dans lequel chaque décalage est maintenu constant sur la totalité d'un champ ;
stocker des signaux numériques consécutifs dans un registre de stockage (56), le premier mot de synchronisation (22) étant compris dans les données d'identification de source (30) contenues dans le signal numérisé ;
générer un second mot de synchronisation (66) ;
corréler le premier mot de synchronisation (22) avec le second mot de synchronisation (66) de façon à récupérer les données d'identification de source (30) ; et
accumuler les données d'identification de source pour permettre l'élimination par moyennage du signal vidéo et du bruit ; et
délivrer les données d'identification de source correspondant aux décalages dynamiques dans la marge de noir vidéo.

2. Procédé selon la revendication 1, dans lequel le procédé consiste en outre à : soumettre à un filtrage adapté le signal vidéo ayant été soumis à un filtrage passe-bas pour augmenter l'amplitude des données d'identification de source tout en compensant le signal vidéo.

3. Procédé selon la revendication 1 ou 2, dans lequel le décalage de la marge de noir vidéo a une amplitude d'environ 0,1 à 0,5 unités IRE.

4. Procédé selon l'une quelconque des revendications précédentes, dans lequel l'accumulation des données d'identification de source s'effectue en réponse à une corrélation réussie entre les premier et second mots de synchronisation.

5. Appareil pour détecter des données d'identification de source (30) incorporées à une image active d'un signal vidéo (42), les données comprenant un premier mot de synchronisation (22), dans lequel les données d'identification de source (30) sont imperceptibles pour un observateur, l'appareil comprenant :
un filtre passe-bas (44) pour recevoir un signal vidéo contenant des données d'identification de source (30);
un générateur de signal d'horloge (50) ;
un convertisseur analogique-numérique (46) pour recevoir le signal vidéo ayant été soumis à un filtrage passe-bas délivré par le filtre passe-bas et numériser le signal en réponse à un premier signal d'horloge (48) généré par le générateur de signal d'horloge (50) ;
un filtre adapté (52) conçu pour recevoir les signaux numérisés et pour détecter des variations d'une marge de noir vidéo du signal vidéo sous la forme de décalages dynamiques de la marge de noir vidéo, dans lequel chaque décalage est maintenu constant sur la totalité d'un champ ;
un registre de stockage (56) pour stocker des signaux numériques consécutifs, le premier mot de synchronisation (22) étant compris dans les données d'identification de source (30) contenues dans le signal numérisé ;
un générateur de mot de synchronisation (60) pour générer un second mot de synchronisation (66) ;
un moyen pour corréler le premier mot de synchronisation (22) avec le second mot de synchronisation (66) de façon à récupérer les données d'identification de source (30) ; et
un registre (76) pour accumuler les données d'identification de source afin que les données d'identification de source décodées finales (80) correspondant aux décalages dynamiques de la marge de noir vidéo soient délivrées.

6. Appareil selon la revendication 5, dans lequel le filtre passe-bas a une fréquence de coupure comprise entre 200 Hz et 1 kHz.

7. Appareil selon la revendication 5 ou 6, dans lequel ledit premier signal d'horloge a une fréquence d'horloge environ quatre fois supérieure à une fréquence de coupure passe-bas dudit filtre passe-bas.

8. Appareil selon l'une quelconque des revendications 5 à 7, dans lequel ledit générateur de mot de synchronisation comprend une mémoire morte préprogrammée.

9. Appareil selon l'une quelconque des revendications 5 à 8, dans lequel les décalages dynamiques de la marge de noir vidéo sont soit positif, soit négatif, soit inchangés, pour des champs vidéo respectifs du signal vidéo.

10. Appareil selon l'une quelconque des revendications 5 à 9, comprenant en outre :
un second générateur de signal d'horloge relié au filtre adapté, dans lequel, en réponse à un second signal d'horloge généré synchrone des données d'identification de source, le registre de stockage est conçu pour stocker des signaux consécutifs et les délivrer en réponse au moyen de corrélation.
